# EUROPÄISCHE PATENTANMELDUNG

(11) **EP 1 258 346 A2**
(43) Veröffentlichungstag der Anmeldung: **20.11.2002**
(21) Anmeldenummer: 02010877.5
(22) Anmeldetag: 15.05.2002
(51) Int. Cl.: B32B 5/26, D04H 13/00, H02G 3/04

(54) **Schutzummantelung**

(30) Priorität: 16.05.2001 DE 10123806
(71) Anmelder: Verta AG, 9004 St. Gallen (CH)
(72) Erfinder: Lindner, Michael, 83026 Rosenheim (DE)
(74) Vertreter: Manitz, Finsterwald & Partner GbR

(57) **Zusammenfassung**

Die Erfindung betrifft eine Schutzummantelung für langgestreckte biegsame Gegenstände, insbesondere Kabel, mit einem mehrschichtigen Aufbau aus zumindest zwei miteinander verbundenen Vliesen.

## Beschreibung

Die Erfindung betrifft eine Schutzummantelung für langgestreckte biegsame Gegenstände.

Langgestreckte biegsame Gegenstände wie beispielsweise Kabel, Kabelbäume, Litzen, Leitungen, Füllrohre von Bowdenzügen werden z.B. in Flugzeugen, Schiffen, Kraftfahrzeugen, Waschmaschinen, Kompressoren, Schaltschränken und allgemein in rotierenden und/oder vibrierenden Maschinen oder Anlagen verlegt und während des Betriebes in Schwingungen versetzt. Aufgrund dieser Schwingungen besteht die Gefahr, daß die langgestreckten biegsamen Gegenstände - beispielsweise durch scharfe Kanten - beschädigt werden.

Aufgabe der Erfindung ist es, eine Schutzummantelung der eingangs genannten Art zu schaffen, die bei möglichst einfacher Herstellung und Verarbeitung eine hohe Abriebfestigkeit aufweist und die insbesondere auf einfache Weise montiert werden kann.

Die Lösung dieser Aufgabe erfolgt durch die Merkmale des Anspruchs 1 und insbesondere dadurch, daß die Schutzummantelung einen mehrschichtigen Aufbau aus zumindest zwei miteinander verbundenen Vliesen aufweist.

Es wurde überraschend festgestellt, daß aufgrund der Verbindung von wenigstens zwei Vliesen die erfindungsgemäße Schutzummantelung eine überaus hohe Abriebfestigkeit und Scheuerfestigkeit aufweist. Ein Vorteil der erfindungsgemäßen Verwendung von Vliesen für jede der die Schutzummantelung bildenden Schichten besteht darin, daß Vliese mit guten Flexibilitätseigenschaften hergestellt werden können. Die Vliese können starken Verformungen, wie sie zur Bildung von schlauch- oder hüllenartigen Gebilden erforderlich sind, ausgesetzt werden, ohne daß die Gefahr der Zerstörung des Vliesaufbaus besteht. Ferner ist bei Vliesen von Vorteil, daß deren Herstellung auf vielfältige Art und Weise variiert werden kann, wodurch die den erfindungsgemäßen mehrschichtigen Aufbau bildenden Vliese und damit der gesamte Vliesverbund gezielt an den jeweiligen Anwendungsfall optimal angepaßt werden können.

Es hat sich herausgestellt, daß die Flexibilität der Vliese und damit die dem erfindungsgemäßen Aufbau aus mehreren flexiblen Vlies-Schichten innewohnende Beweglichkeit eine erheblich verbesserte Abriebfestigkeit zur Folge hat. Tests haben ergeben, daß das erfindungsgemäße Material eine um ein vielfaches bessere Abriebfestigkeit aufweist als eine Schutzummantelung, die lediglich aus einem einzigen Vlies besteht.

Gemäß einem bevorzugten Ausführungsbeispiel der Erfindung sind unterschiedliche Vliese vorgesehen. Dabei können sich die den mehrschichtigen Aufbau bildenden Vliese hinsichtlich eines einzigen Merkmals oder hinsichtlich mehrerer Merkmale voneinander unterscheiden.

Grundsätzlich ist es erfindungsgemäß aber auch möglich, daß die Schutzummantelung von identischen Vliesen gebildet wird.

Die Eigenschaften der Schutzummantelung können beispielsweise durch die Wahl der Ausgangsmaterialien für die Vliese bestimmt werden.

So kann wenigstens eines der Vliese zumindest zum Teil aus Endlos-Filamenten hergestellt sein. Es ist auch möglich, daß wenigstens eines der Vliese zumindest zum Teil aus Fasern endlicher Länge hergestellt ist.

Ferner wird vorgeschlagen, daß wenigstens eines der Vliese ein Spinnvlies ist.

Insbesondere bei der Verwendung von Fasern endlicher Länge als Ausgangsmaterial kann vorgesehen sein, daß wenigstens eines der Vliese durch ein aerodynamisches Verfahren gebildet ist. Durch diese Art der Vliesbildung kann ein Wirrvlies geschaffen werden.

Gemäß einem weiteren Ausführungsbeispiel der Erfindung ist wenigstens eines der Vliese durch ein hydrodynamisches Verfahren gebildet. Hierbei verwendetes Wasser dient insbesondere zum Auflösen, Transportieren und Ablegen von als Ausgangsmaterial verwendeten Fasern.

Des weiteren kann vorgesehen sein, daß wenigstens eines der Vliese durch ein mechanisches Verfahren gebildet ist. Bei dem hierdurch hergestellten Vlies kann es sich beispielsweise um ein Quervlies, ein Kreuzvlies oder ein Wirrvlies handeln.

Des weiteren können sich die den mehrschichtigen Aufbau der erfindungsgemäßen Schutzummantelung bildenden Vliese durch die Art und Weise ihrer Verfestigung auszeichnen.

So kann vorgesehen sein, daß wenigstens eines der Vliese durch Vernähen verfestigt ist.

Wenn gemäß einer weiteren Ausführungsform der Erfindung wenigstens eines der Vliese durch Nähwirken verfestigt ist, dann kann es sich bei dem Vlies beispielsweise um ein Malivlies, ein Maliwatt-Vlies, ein Kunit-Vlies, ein Multiknit-Vlies, ein Voltex-Vlies oder ein Malimo-Vlies handeln.

Ferner wird erfindungsgemäß vorgeschlagen, daß wenigstens eines der Vliese durch Vernadeln verfestigt ist. Während hierbei die Vliesverfestigung dadurch erfolgt, daß das Vlies vertikal von mit Widerhaken versehenen Nadeln durchstochen wird, wodurch vertikale Faserpfropfen geformt werden, wird bei einer als Vermaschen bezeichneten Verfestigungsart das Vlies vertikal von einem System aus Schiebernadeln und Schließdrähten durchstoßen, wodurch auf einer Vliesoberfläche Fasermaschen gebildet werden. Erfindungsgemäß wird vorgeschlagen, daß wenigstens eines der Vliese ein derartiges, durch Vermaschen verfestigtes Vlies ist.

Ferner kann es sich bei wenigstens einem der Vliese um ein wasserstrahlverfestigtes Vlies handeln, also um ein Vlies, das zu seiner Verfestigung mit Wasserstrahlen unter hohem Druck behandelt worden ist.

Gemäß einer weiteren Ausführungsform der Erfindung ist vorgesehen, daß wenigstens eines der Vliese thermisch verfestigt ist. Außerdem kann wenigstens eines der Vlies chemisch verfestigt sein.

Ein weiteres Ausführungsbeispiel der Erfindung schlägt vor, daß wenigstens eines der Vliese durch Imprägnieren verfestigt ist.

Ferner kann vorgesehen sein, daß wenigstens eines der Vliese durch Druckeinwirkung verfestigt ist, wobei es bevorzugt ist, wenn die Druckeinwirkung durch Kalandrieren erfolgt ist.

Außerdem wird vorgeschlagen, daß wenigstens eines der Vliese durch Schrumpfen verfestigt ist, wobei insbesondere die Schrumpfung durch Wärme und/oder durch Feuchtigkeit induziert worden ist.

Grundsätzlich ist es erfindungsgemäß möglich, daß es sich bei zumindest einer der den Aufbau der erfindungsgemäßen Schutzummantelung bildenden Schichten um ein Vlies handelt, das durch mehr als eine der genannten Verfestigungsarten verfestigt worden ist.

Das Flächengewicht zumindest eines der Vliese liegt vorzugsweise im Bereich von etwa 20 bis 500 g/m².

Ferner wird vorgeschlagen, daß es sich bei wenigstens einem der Vliese um ein Reinvlies handelt, das aus einem sortenreinen Ausgangsmaterial hergestellt ist.

Des weiteren ist es erfindungsgemäß möglich, daß wenigstens eines der Vliese ein Mischvlies aus unterschiedlichen Ausgangsmaterialien ist.

Die erfindungsgemäße Schutzummantelung kann grundsätzlich jede beliebige Kombination von Vliesen umfassen, die jeweils zumindest eines der vorstehend genannten Merkmale aufweisen.

Eine bevorzugte Kombination besteht erfindungsgemäß darin, daß der mehrschichtige Aufbau wenigstens ein Maliwatt-Vlies im Verbund mit zumindest einem Nadelvlies umfaßt. Dabei bildet vorzugsweise im Benutzungszustand das Maliwatt-Vlies die äußere Vliesschicht und das Nadelvlies die innere Vliesschicht. Von Vorteil ist diese Ausgestaltung insbesondere bei Ausbildung der Schutzummantelung als Wickelband, da sich das Wickelband bei außen liegendem Maliwatt-Vlies besonders leicht abrollen läßt. Die Haftkraft eines auf der Innenseite aufgebrachten Klebemittels bleibt bei Verwendung eines Maliwatt-Vlieses auf der Außenseite erhalten, da das Maliwatt-Vlies keiner Oberflächenbehandlung unterzogen werden muß, um ein Herausreißen von Fasern beim Abrollen zu verhindern. Grundsätzlich kommt erfindungsgemäß aber auch die umgekehrte Anordnung in Frage, d.h. die Kombination mit innerem Maliwatt-Vlies und äußerem Nadelvlies.

Eine weitere bevorzugte praktische Ausgestaltung umfaßt einen mehrschichtigen Aufbau für die Schutzummantelung, der wenigstens ein chemisch verfestigtes Vlies im Verbund mit zumindest einem Nadelvlies umfaßt.

Ferner wird eine Kombination vorgeschlagen, bei welcher der mehrschichtige Aufbau wenigstens ein wasserstrahlverfestigtes Vlies im Verbund mit zumindest einem Nadelvlies umfaßt.

Bevorzugt ist es erfindungsgemäß außerdem, wenn der mehrschichtige Aufbau ein Kunit- oder Multiknit-Vlies im Verbund mit zumindest einem Nadelvlies umfaßt. Aufgrund der besonders guten Stabilitätseigenschaften eines Kunit-Vlieses ist diese Kombination insbesondere dann von Vorteil, wenn die Schutzummantelung in Form eines Wickelbandes vorgesehen ist.

Erfindungsgemäß ist es besonders bevorzugt, wenn der mehrschichtige Aufbau genau zwei Vliese umfaßt.

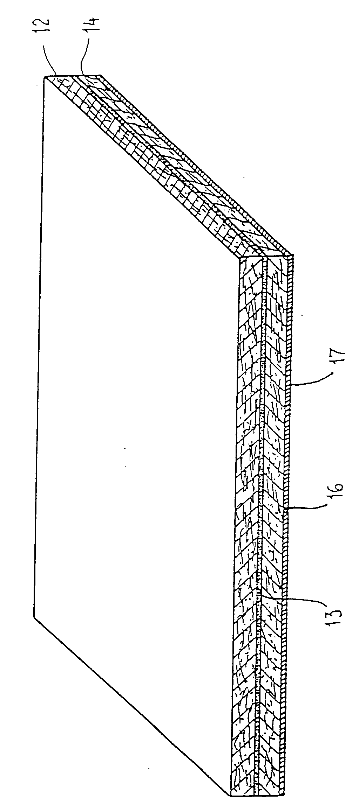

Weitere Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben, deren einzige Figur eine Ausführungsform einer erfindungsgemäßen Schutzummantelung in einem flächigen Zustand zeigt.

Die Figur zeigt eine Ausführungsform einer erfindungsgemäßen Schutzummantelung, bevor diese in eine schlauch- oder hüllenartige Form gebracht wird. Dargestellt ist ein Abschnitt eines bahn- oder bandförmigen Endlosstreifens, der in jeder für die Praxis erforderliche Breite hergestellt und nach erfolgter Herstellung z.B. auf Rollen gelagert werden kann. Die Schutzummantelung kann auch in Form eines Wickelbandes vorgesehen sein.

Die Schutzummantelung umfaßt zwei Vliesschichten, wobei die Vliese 12, 14 miteinander mittels eines Klebstoffs 13 verklebt sind.

Das im montierten Zustand dem zu schützendem Gegenstand zugewandte Vlies 14 ist mit einer Klebeschicht 16 versehen, die dazu dient, die Schutzummantelung auf einem Gegenstand zu fixieren.

Bei der Herstellung der in der Figur dargestellten Schutzummantelung wird die Klebeschicht 16 durch ein Schutzpapier 17 bedeckt, auf das aber auch verzichtet werden kann.

In einer bevorzugten Ausgestaltung der Schutzummantelung handelt es sich bei dem äußeren Vlies 12 um ein Maliwatt-Vlies und bei dem inneren Vlies 14 um ein Nadelvlies. Diese Schutzummantelung ist bevorzugt in Form eines Wickelbandes vorgesehen, bei dem kein Schutzpapier 17 vorgesehen ist und somit die Klebeschicht 16 im aufgewickelten Zustand direkt an der Außenseite des Maliwatt-Vlieses 12 haftet.

Grundsätzlich kann erfindungsgemäß die Schutzummantelung aus einer beliebigen Kombination von Vliesen 12, 14 gebildet werden, wie sie im Einleitungsteil erwähnt werden.

### Bezugszeichenliste

- 12: Vlies
- 14: Vlies
- 13: Klebstoff
- 16: Klebeschicht
- 17: Schutzschicht

## Patentansprüche

1. Schutzummantelung für langgestreckte biegsame Gegenstände (10), insbesondere Kabel, mit einem mehrschichtigen Aufbau aus zumindest zwei miteinander verbundenen Vliesen (12, 14).

2. Schutzummantelung nach Anspruch 1,
**dadurch gekennzeichnet,**
**dass** unterschiedliche Vliese (12, 14) vorgesehen sind.

3. Schutzummantelung nach Anspruch 1 oder 2,
**dadurch gekennzeichnet,**
**dass** wenigstens eines der Vliese (12, 14) zumindest zum Teil aus Endlos-Filamenten hergestellt ist, und/oder
**dass** wenigstens eines der Vliese (12, 14) zumindest zum Teil aus Fasern endlicher Länge hergestellt ist.

4. Schutzummantelung nach einem der vorhergehenden Ansprüche,
**dadurch gekennzeichnet,**
**dass** wenigstens eines der Vliese (12, 14) ein Spinnvlies, ein Quervlies, ein Kreuzvlies, ein Wirrvlies, ein Malivlies, ein Maliwatt-Vlies, ein Kunit-Vlies, ein Multiknit-Vlies, ein Voltex-Vlies, ein Malimo-Vlies, ein Reinvlies aus einem sortenreinen Ausgangsmaterial und/oder ein Mischvlies aus unterschiedlichen Ausgangsmaterialien ist.

5. Schutzummantelung nach einem der vorhergehenden Ansprüche,
**dadurch gekennzeichnet,**
**dass** wenigstens eines der Vliese (12, 14) durch ein aerodynamisches, ein hydrodynamisches und/oder ein mechanisches Verfahren gebildet ist.

6. Schutzummantelung nach einem der vorhergehenden Ansprüche,
**dadurch gekennzeichnet,**
**dass** wenigstens eines der Vliese (12, 14) durch Vernähen, durch Nähwirken, durch Vernadeln, durch Vermaschen, durch Imprägnieren, durch Druckeinwirkung, insbesondere durch Kalandrieren, und/oder durch insbesondere wärme- und/oder feuchtigkeitsinduziertes Schrumpfen verfestigt ist, und/oder
**dass** wenigstens eines der Vliese (12, 14) wasserstrahlverfestigt, thermisch verfestigt und/oder chemisch verfestigt ist.

7. Schutzummantelung nach einem der vorhergehenden Ansprüche,
**dadurch gekennzeichnet,**
**dass** wenigstens eines der Vliese (12, 14) ein Flächengewicht im Bereich von etwa 20 bis 500 g/m² aufweist.

8. Schutzummantelung nach einem der vorhergehenden Ansrpüche,
**dadurch gekennzeichnet,**
**dass** die den mehrschichtigen Aufbau bildenden Vliese (12, 14) jeweils die Merkmale zumindest eines der Ansprüche 3 bis 7 aufweisen.

9. Schutzummantelung nach einem der vorhergehenden Ansprüche,
**dadurch gekennzeichnet,**
**dass** der mehrschichtige Aufbau wenigstens ein Maliwatt-Vlies im Verbund mit zumindest einem Nadelvlies umfaßt, wobei bevorzugt im Benutzungszustand das Maliwatt-Vlies die äußere Vliesschicht und das Nadelvlies die innere Vliesschicht bildet, und/oder
**dass** der mehrschichtige Aufbau wenigstens ein chemisch verfestigtes Vlies im Verbund mit zumindest einem Nadelvlies umfaßt, und/oder
**dass** der mehrschichtige Aufbau wenigstens ein wasserstrahlverfestigtes Vlies im Verbund mit zumindest einem Nadelvlies umfaßt, und/oder
**dass** der mehrschichtige Aufbau wenigstens ein Kunit- oder Multiknit-Vlies im Verbund mit zumindest einem Nadelvlies umfaßt.

10. Schutzummantelung nach einem der vorhergehenden Ansprüche,
**dadurch gekennzeichnet,**
**dass** ein Verbund aus genau zwei Vliesen (12, 14) vorgesehen ist, die bevorzugt voneinander verschieden sind.
